# EUROPÄISCHE PATENTSCHRIFT

(11) **EP 0 965 405 B1**
(45) Veröffentlichungstag und Bekanntmachung des Hinweises auf die Patenterteilung: **20.04.2005**
(21) Anmeldenummer: 99810525.8
(22) Anmeldetag: 14.06.1999
(51) Int. Cl.: B23B 51/00

(54) **Bohrwerkzeug**
Drilling tool
Outil de forage

(30) Priorität: 20.06.1998 DE 19827536
(43) Veröffentlichungstag der Anmeldung: 22.12.1999
(73) Patentinhaber: HILTI Aktiengesellschaft, 9494 Schaan (LI)
(72) Erfinder: Kleine, Werner, 28832 Achim (DE); Geiger, Harald, 86916 Kaufering (DE)
(74) Vertreter: Wildi, Roland

(56) Entgegenhaltungen:
- DE-A- 2 348 874
- DE-A- 3 025 890
- DE-A- 19 545 647
- DE-U- 29 702 612

## Beschreibung

Die Erfindung betrifft ein Bohrwerkzeug gemäss dem Oberbegriff des Patentanspruchs 1, wie as aus DE 297 02 612 U bekannt ist.

Zur Erstellung von Bohrungen in Beton, Mauerwerk, Gestein oder dgl. werden Bohrwerkzeuge eingesetzt, die einen Bohrkopf mit Schneiden aus einem Schneidwerkstoff, vorzugsweise aus einem Hartmetall, aufweisen. Die Bohrwerkzeuge werden üblicherweise in handgeführte Bohrgeräte eingesetzt, die zusätzlich zum Drehantrieb des Bohrwerkzeugs auch axiale Schläge erzeugen. Die axialen Schläge werden auf das in die Werkzeugaufnahme des Bohrgeräts eingesetzte Bohrwerkzeug abgegeben und über den Schaft und den Bohrkopf in den zu bearbeitenden Untergrund eingeleitet. Auf diese Weise wird der Untergrund schabend, meisselnd bearbeitet und in mehr oder weniger kleinen Bruchstücken abgebaut. Im Einsatz kommt es nicht bloss auf die Standzeit des Bohrwerkzeugs an. Vor allem bei professionellen Anwendungen spielen der erzielbare Bohrfortschritt und der erforderliche Kraftaufwand eine grosse Rolle. Aus dem Stand der Technik sind eine Reihe von Vorschlägen bezüglich der Anordnung der Schneiden im Bohrkopf bekannt, die einerseits einen schnellen Bohrfortschritt und einen möglichst geringen Kraftaufwand gewährleisten sollen.

Aus der DE-A-43 03 590 ist ein Gesteinsbohrwerkzeug bekannt, das zusätzlich zu einer Hauptschneidplatte eine oder mehrere Nebenschneidplatten aufweist, die sich schräg, insbesondere senkrecht zur Hauptschneidplatte erstrecken. Die Hauptschneidplatte erstreckt sich vom Umfang des Bohrkopfs zu einer gegenüberliegenden Hauptabfuhrnut. An der der Hauptabfuhrnut gegenüberliegenden Seite sind zwischen der Hauptscheidplatte und den Nebenschneidplatten weitere, kleinere Abfuhmuten vorgesehen. Der einseitige radiale Überstand der Hauptschneidplatte gegenüber dem Umfang des Bohrkopfs ist grösser als der radiale Überstand der Nebenschneidplatten und soll den Bohrdurchmesser definieren. Infolge des nur einseitigen radialen Überstands der Hauptschneidplatte wird das Bohrwerkzeug im Einsatz aus der Mitte gedrückt. Dem kann der Anwender nur durch einen übermässig grossen Kraftaufwand begegnen. Sobald die Kraft, mit der der Anwender versucht, die Ausweichtendenzen des Bohrwerkzeugs auszugleichen, reduziert wird, weicht das Bohrwerkzeug seitlich aus. Das Resultat ist eine sehr ungleichmässige Bohrung. Die Anordnung der Abfuhrnuten am Bohrkopf ist ungünstig und kann dazu führen, dass das insbesondere vom Mittenbereich der Hauptschneidplatte abgebaute Material nur unzureichend schnell abtransportiert wird. Daraus resultiert ein nur relativ langsamer Bohrfortschritt.

In der WO-96/35856 ist eine Schneidenanordnung vorgeschlagen, bei der eine sich über den Durchmesser des Bohrkopfs erstreckende Schneidplatte eine Hauptschneide und eine axial zurückgesetzte Sekundärschneide aufweist. Radial angeordnete plattenförmige Zusatzschneiden überragen den Umfang des Bohrkopfs radial derart, dass sie den Bohrungsdurchmesser definieren. Der axiale Überstand der Zusatzschneiden gegenüber der Stirnfläche des Bohrkopfs liegt zwischen den axialen Überständen der Primärschneide und der Sekundärschneide. Die radial längere Primärschneide umfasst eine Zentrierspitze, die mit der Längsachse des Schafts zusammenfällt. Der radiale Überstand der Primärschneide ist gleich oder kleiner als der radiale Überstand der Zusatzschneiden. Zwischen der Primärschneide und den Zusatzschneiden münden im Kopf Bohrmehlabfuhrnuten. Zwei weitere, deutlich kleinere Abfuhrnuten münden zwischen den Zusatzschneiden und der Sekundärschneide. Während die beiden Bohrmehlnuten zwischen der Primärschneide und den Zusatzschneiden verhältnismässig gross ausgebildet sind, weisen die zusätzlichen Abfuhrnuten einen verhältnismässig kleinen Querschnitt auf. Dies kann dazu führen, dass insbesondere am Mittenbereich der Schneiden entstehendes Bohrmehl nicht ausreichend schnell abtransportiert wird. Auch die Zuordnung einer nur sehr kleinen Abfuhrnut zu einer der Zusatzschneiden ist ungünstig. Die den Bohrduchmesser definierenden Zusatzschneiden leisten im Betrieb einen wesentlichen Teil der Abbauarbeit. Aufgrund der Anordnung der Schneiden und der Abfuhrnuten besteht die Gefahr, dass die kleinere, zusätzliche Abfuhrnut das an der zugehörigen Zusatzschneide anfallende Bohrmehl nicht ausreichend schnell bewältigen und abtransportieren kann. Dies kann zu einer verminderten Bohrleistung und zu ungleichmässigen Bohrungen führen. Die sich über den Durchmesser des Bohrkopfs erstreckende Schneidplatte ist im Verhältnis zu den Zusatzschneidplatten sehr massiv ausgebildet. Sie ist in eine durchgehende Nut in der Stirnfläche des Bohrkopfs eingebettet. Der zu beiden Längsseiten der Schneidplatte verbleibende Materialsteg des Bohrkopfs ist relativ dünn ausgebildet, was sich negativ auf die Standzeit des Bohrwerkzeugs auswirken kann.

Aus der DE-A-23 48 874 ist ein Bohrwerkzeug mit einem Bohrkopf mit drei im gleichen Winkelabstand voneinander radial angeordneten Schneidplatten beschrieben, die durch etwa axial verlaufende Kopfnuten voneinander getrennt sind. Die längere der drei Schneidplatten umfasst eine mit der Schaftachse zusammenfallende Zentrierspitze und erstreckt sich darüber hinaus ein Stück in Richtung der gegenüberliegenden Kopfnut. Der ein Zentrierteil bildende Mittenabschnitt der längeren Schneidplatte dient der Zentrierung des Bohrwerkzeugs. Bei der gewählten Anordnung der Schneiden besteht die Gefahr, dass das abgebaute Material nicht schnell genug abtransportiert wird und den weiteren Materialabbau behindert. Insbesondere das im Mittenbereich der längeren Schneidplatte abgebaute Material kann nicht schnell genug zur in radialer Verlängerung der Schneidplatte angeordneten Kopfnut gelangen, da der Abtransport durch die seitlich angeordneten weiteren Schneidplatten behindert wird. Dadurch wird der Bohrfortschritt behindert, und es ist ein erhöhter Kraftaufwand erforderlich.

Aus der DE 297 02 612 U1 ist ein Bohrer mit einer Hauptschneidplatte und zwei sich schräg zu dieser erstreckenden und dieser nachlaufenden Nebenschneidplatten bekannt. Die Schneidplatten sind dabei in Nuten im Bohrerkem eingelassen. Die Hauptschneidplatte erstreckt sich zwischen zwei Bohrmehlabfuhmuten, während die Nebenschneidplatten zwischen den Bohrmehlabfuhrnuten angeordnet sind.

Aus der DE 23 48 874 A1 ist ein Gesteinsbohrer bekannt, der in der Bohrkrone drei Schneiden aufweist, von denen eine von der Bohrerspitze bis zur Peripherie verläuft während die beiden anderen Schneiden kürzer ausgebildet sind und ausgehend von der Peripherie nicht bis zur Bohrerspitze reichen.

Aus der DE 30 25 890 A1 ist ein Bohrer bekannt, bei dem vier Schneiden an radialen Schenkeln eines einstückigen Hartmetalleinsatzes ausgebildet sind, in dessen Mitte eine die Schneiden überhöhende Zentrierspitze vorgesehen ist. Die Schenkel verlaufen dabei kreuzweise zueinander wobei benachbarte Schenkel entweder einen rechten Winkel oder aber abwechselnd eine spitzen und einen stumpfen Winkel einschliessen.

Aus der DE 195 45 647 A1 ist ein Drehschlag-Wendelbohrer mit einem Schaft bekannt, der wenigstens eine spiralförmig in seinem Mantel verlaufende Hauptabfuhrnut für Bohrklein aufweist. Eine Hartmetallschneide ist an einem einstückigen Schneidplättchen ausgebildet, dessen Fussteil im Wesentlichen in einer sich über den Durchmesser des Schafts erstreckenden durchgehenden Nut in einem Stirnende des Schaftes fixiert ist.

Aufgabe der vorliegenden Erfindung ist es daher, diesen Nachteilen der Bohrwerkzeuge des Stands der Technik abzuhelfen. Es soll ein Bohrwerkzeug geschaffen werden, das einen hohen Bohrfortschritt bei guter Zentrierwirkung gewährleistet. Das Bohrwerkzeug soll eine hohe Lebensdauer besitzen und insbesondere eine gute Armierungstauglichkeit und -festigkeit aufweisen. Dazu soll das Bohrwerkzeug einfach und kostengünstig herstellbar sein.

Die Lösung dieser Aufgaben besteht in einem Bohrwerkzeug, das die im kennzeichnenden Abschnitt des Patentanspruchs 1 angeführten Merkmale aufweist. Gemäss der Erfindung wird ein Bohrwerkzeug mit einem länglichen Schaft mit wenigstens einer wendelförmigen Abfuhrnut für Bohrklein geschaffen, an dessen einem Längsende ein Einsteckende für die Werkzeugaufnahme eines Bohrgeräts vorgesehen ist. Das gegenüberliegende Längsende des Schafts grenzt an einen Bohrkopf an, der mit wenigstens zwei, vorzugsweise im wesentlichen axial verlaufenden Kopfnuten versehen ist, die mit der wenigstens einen Abfuhrnut in Verbindung stehen. Die Stirnfläche des Bohrkopfs ist von Schneiden aus einem Schneidwerkstoff überragt. Die Schneiden umfassen ein Zentrierteil mit einer Zentrierspitze, die mit der Achse des Schafts zusammenfällt, und wenigstens zwei Umfangsschneiden, die gegenüber der Zentrierspitze axial zurückgesetzt sind. Die Umfangsschneiden überragen den Umfang des Bohrkopfs im Bereich zwischen den Kopfnuten radial derart, dass sie den Bohrdurchmesser definieren. Das Zentrierteil ist plattenförmig ausgebildet und in einer Montagenut montiert, die zur Stirnfläche des Bohrkopfs und zu wenigstens einer der Kopfnuten hin offen ausgebildet ist. Zudem weist das Zentrierteil wenigstens eine die Zentrierspitze umfassende Zentrierschneide auf, die dem Verlauf der Montagenut im wesentlichen folgt und mit einer in Drehrichtung vorauseilenden Umfangsschneide einen Winkel von etwa 30° bis etwa 150° einschliesst.

Das Zentrierteil ist sternförmig mit drei radial verlaufenden Zentrierschneiden ausgebildet und weist drei Umfangsschneiden auf. Die Zentrierschneiden sind dabei gegenüber den in Drehrichtung vorauseilenden Umfangsschneiden in Umfangsrichtung jeweils um einen Winkel zwischen etwa 30° und etwa 90 ° versetzt angeordnet.

Die erfindungsgemässe Anordnung der Schneiden am Bohrkopf, der möglichst kompakt ausgebildet ist und üblicherweise eine im wesentlichen plane oder kegelige Frontgeometrie aufweist, ermöglicht einen guten Bohrfortschritt. Der Bohrdurchmesser ist durch den radialen Überstand der Umfangsschneiden festgelegt. Den drei Umfangsschneiden ist jeweils eine Kopfnut zugeordnet, die einen raschen Abtransport des von den Schneiden abgebauten Materials gewährleisten. Das plattenförmige Zentrierteil weist drei Zentrierschneiden auf, die gegenüber einer der Umfangsschneiden in Umfangsrichtung gedreht verläuft. Die Montagenut, in der das Zentrierteil befestigt ist, ist zur Kopfnut hin offen ausgebildet. Nach der Montage des Zentrierteils bildet der ungefüllt verbleibende Teil der Montagenut einen Abfuhrkanal für das Material, das von der im wesentlichen parallel zur Montagenut verlaufenden Zentrierschneide abgebaut wird. Dadurch wird auch das im Mittenbereich des Bohrkopfs von den Schneiden erzeugt Bohrmehl sicher und schnell aus dem Angriffsbereich der Schneiden zu der angrenzenden Kopfnut transportiert, und der weitere Abbau von Material wird nicht behindert. Die Schneiden bestehen aus dem Zentrierteil mit den Zentrierschneiden und drei axial zurückgesetzten Umfangsschneiden, deren radialer Überstand gegenüber dem Umfang des Bohrkopfs den Bohrdurchmesser definiert. Die Anzahl und die Anordnung der Schneiden reduziert den für den Abbau erforderlichen Kraftaufwand. Das erfindungsgemäss ausgebildete Bohrwerkzeug erlaubt daher mit einem verhältnismässig geringen Kraftaufwand einen schnellen Bohrfortschritt. Die den Bohrdurchmesser definierenden Umfangsschneiden werden vom Zentrierteil axial überragt. Dadurch werden sie insbesondere beim Anbohrvorgang durch die axialen Schläge weniger stark beansprucht, was sich vorteilhaft auf die Standzeit des Bohrwerkzeugs auswirkt. Dies erlaubt den Einsatz härterer Schneidstoffe für die Umfangsschneiden und schlagzäher Schneidwerkstoffe für das Zentralteil. Die Herstellung des Bohrwerkzeugs ist verhältnismässig kostengünstig, da alle Montagenuten für die Umfangsschneiden und das Zentrierteil gleichzeitig gefräst werden können.

Zur weiteren Verbesserung des Abtransports des abgebauten Materials erstreckt sich die Zentrierschneide bis zur Kopfnut. Vorzugsweise ragt sie radial über den Grund der Kopfnut hinaus.

In einer vorteilhaften Ausführungsvariante der Erfindung sind die Umfangsschneiden an plattenförmigen Schneidkörpern ausgebildet und verlaufen im wesentlichen radial. Die plattenförmige Ausbildung der Umfangsschneiden und ihr radialer Verlauf begünstigen einen "chippenden" Materialabbau auch im Umfangsbereich des Bohrkopfs.

In einer Variante der Erfindung, die herstellungstechnische Vorteile bietet, ist die Plattenstärke der Umfangsschneiden wenigstens gleich gross wie die Plattenstärke des Zentrierteils. Bei gleich grosser Plattenstärke liegt der Vorteil darin, dass die Aufnahmenuten für die plattenförmigen Schneidteile mit den gleichen Werkzeugen erstellt werden können. Indem die Plattenstärke der Umfangsschneiden grösser ist als die Plattenstärke des Zentrierteils kann dem Umstand Rechnung getragen werden, dass die Umfangsgeschwindigkeit der Umfangsschneiden grösser ist als diejenige des im Mittenbereich des Bohrkopf angeordneten Zentrierteils.

Zur Verbesserung der Abbauleistung des Bohrwerkzeugs sind drei Umfangsschneiden vorgesehen. Die Umfangsschneiden überragen die stirnseitige Hüllfläche des Bohrkopfs im gleichen Ausmass und weisen gegenüber seinem Umfangshüllkreis den gleichen radialen Überstand auf. Durch die grössere Anzahl von Umfangsschneiden fällt pro Umdrehung jeder Schneide ein kleinerer zu bearbeitender Umfangsbereich zu. Auf diese Weise wird die Rundheit der Bohrung verbessert. Gleichzeitig wird die Lebensdauer der Schneiden erhöht und die Klemmneigung des Bohrkopfs in der Bohrung verringert.

Die Herstellung des integralen Schneidteils bedingt bloss entsprechend modifizierte Formen und erfolgt beispielsweise einfach durch Pressen und Sintern eines Schneidwerkstoffs, vorzugsweise eines Hartmetalls. Ist die Umfangsschneide axial nicht zurückgesetzt, kann das integrale Schneidteil vorteilhaft zwischen der Umfangsschneide und der angrenzenden Zentrierschneide eine Kerbe aufweisen. Dadurch kann ein verbesserter Bohrfortschritt erreicht werden.

In einer vorteilhaften Ausführungsvariante weist das Zentrierteil mehrere Zentrierschneiden auf, die sich von der Zentrierspitze bis zu den am Umfang des Bohrkopfs vorgesehen Kopfnuten erstrecken und in sternförmig ausgebildeten Montagenuten befestigt sind, die zu den Kopfnuten hin offen ausgebildet sind. Die zu den Kopfnuten hin offenen Montagenuten unterstützen den Abtransport des von den Zentrierschneiden abgebauten Materials. Die axialen Schläge werden auf mehrere Zentrierschneiden verteilt. Dadurch wird die einzelne Zentrierschneide nicht so tief in den Untergrund eingeschlagen. Bei der Drehung des Bohrwerkzeugs wird das Material in kleineren Bruchstücken vom Untergrund abgeschert. Die Schneiden müssen für die Bruchstücke weniger zusätzliche Zerkleinerungsarbeit leisten, und das abgebaute Material kann schneller zu den Kopfnuten hin und durch sie abtransportiert werden.

Zur Verbesserung der Zentrierwirkung und der Gleichlaufeigenschaften des Bohnverkzeugs ist das Zentrierteil symmetrisch aufgebaut. Vorzugsweise weist es dabei eine Anzahl von Zentrierschneiden auf, die der Zahl der Umfangsschneiden entspricht. Die Zentrierschneiden verlaufen beispielsweise alle im wesentlichen in radialer Richtung und sind jeweils gegenüber den Umfangsschneiden in Umfangsrichtung gedreht. Die Zentrierschneiden müssen nicht notwendigerweise radial verlaufen. Sie können auch unter einem Winkel zu einem Radius angestellt sein.

Für die Bearbeitung des Materials erweist es sich als zweckmässig, wenn der von den Zentrierschneiden an der Zentrierspitze eingeschlossene Spitzenwinkel etwa 110° und etwa 150° beträgt.

Aus Symmetriegründen weisen benachbarte Umfangsschneiden voneinander vorzugsweise den gleichen Winkelabstand auf. Dabei sind sie jeweils durch eine Kopfnut voneinander getrennt. Allen Umfangsschneiden ist in unmittelbarer Nachbarschaft eine Kopfnut zugeordnet. Die Kopfnuten nehmen einen wesentlichen Teil des Umfangs des Bohrkopfs zwischen den Umfangsschneiden ein und sind, wie die Umfangsschneiden, vorzugsweise im gleichen Winkelabstand voneinander angeordnet. Vorzugsweise weisen alle Kopfnuten den gleichen Querschnitt auf.

Für die Gleichlaufeigenschaften des Bohrwerkzeugs und für den Bohrfortschritt erweist es sich von Vorteil, wenn alle zum Umfang des Bohrkopfs hin abfallenden Schneiden auf einer einzigen Kegelmantelfläche angeordnet sind.

Die vom Bohrgerät auf das Bohrwerkzeug abgegebenen axialen Schläge werden insbesondere beim Anbohrvorgang in erster Linie über das Zentrierteil in den Untergrund eingeleitet. Um der höheren Schlagbeanspruchung des Zentrierteils Rechnung zu tragen, weist das plattenförmige Zentrierteil im Bereich seines in den Bohrkopf eingebetteten Fussteils wenigstens eine Erweiterung auf, die im achsnahen Bereich des Fussteils angeordnet und vorzugsweise teilkreisartig ausgebildet ist. Die Erweiterung dient der Verstärkung des Zentrierteils. Zusätzlich bildet sie eine Montagehilfe bei der Befestigung des Zentrierteils in einer korrespondierend ausgebildeten Nut in der Stirnfläche des Bohrkopfs. Die Erweiterung kann gegenüber der Schaftachse versetzt sein. Es erweist sich jedoch von Vorteil, wenn auch die teilkreisförmigen Erweiterungen symmetrisch zueinander vorgesehen sind und insbesondere die Schaftachse als Mittelpunkt besitzen.

Das Fussteil des Zentrierteils und/oder der die Umfangsschneiden tragenden Schneidkörper weist vorzugsweise eine im wesentlichen halbkreisförmigen Aussenkontur auf. Dadurch ist die Fussform optimal an die Kontur der Montagenuten im Bohrkopf angepasst, die üblicherweise mit Fingerfräsern erstellt werden. Das Zentrierteil und/oder die Schneidkörper füllen die Montagenuten bis zum Nutengrund hin aus. Sie sind besser im Bohrkopf gehalten und abgestützt, wodurch die Bruchanfälligkeit reduziert wird.

Im folgenden wird die Erfindung unter Bezugnahme auf schematisch dargestellte Ausführungsbeispiele näher erläutert. Es zeigen:
- Fig. 1: eine Draufsicht auf den Bohrkopf eines Ausführungsbeispiels;
- Fig. 2: ein weiteres Ausführungsbeispiel in Draufsicht auf den Bohrkopf; und
- Fig. 3: eine Seitenansicht des Ausführungsbeispiels gemäss Fig. 2.

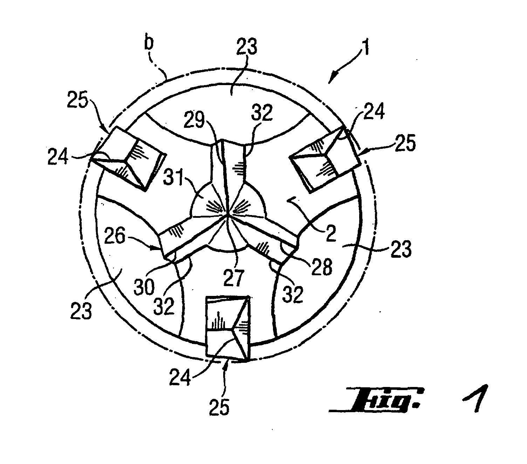

Die in den Fig. 1-3 dargestellten Ausführungsbeispiele des Bohrwerkzeugs weisen jeweils einen an einen länglichen Schaft angrenzenden Bohrkopf 1, dessen Stimfläche 2 von Schneiden überragt wird, die aus einem Schneidwerkstoff, vorzugsweise aus einem Hartmetall, bestehen. Der Schaft ist an seinem dem Bohrkopf gegenüberliegenden Endabschnitt beispielsweise mit einem an sich bekannten Einsteckende für die Werkzeugaufnahme eines vorzugsweise handgeführten Bohrgeräts ausgestattet, das während der Rotation des Bohrwerkzeugs um seine Achse A axiale Schläge auf das rückwärtige Ende des Bohrwerkzeugs abgibt. Derartige Bohrgeräte sind beispielsweise die Hammerbohrund/oder Meisselgeräte der Anmelderin. Die axialen Schläge werden über den länglichen Schaft und den mit Schneiden bestückten Bohrkopf 1 in den zu bearbeitenden Untergrund eingeleitet.

Das Ausführungsbeispiel gemäss Fig. 1 weist am Umfang des Bohrkopfs 1 drei Kopfnuten 23 auf. Zwischen den Kopfnuten 23 sind drei Umfangsschneiden 24 angeordnet, die an drei Schneidkörpem 25 vorgesehen sind, die im Peripheriebereich des Bohrkopfs 1 in Aussparungen in der Stirnfläche 2 eingesetzt sind und deren radialer Überstand gegenüber dem Umfang des Bohrkopfs 1 den Bohrdurchmesser festlegt. Der Hüllkreis der Umfangsschneiden 4 ist strichliert angedeutet und mit dem Bezugszeichen b versehen. Ein sternförmig ausgebildetes Zentrierteil 26 mit drei radial verlaufenden Zentrierschneiden 28, 29, 30, die in Umfangsrichtung zueinander versetzt sind und sich jeweils von der mit der Achse zusammenfallenden Zentrierspitze 27 zu einer Kopfnut 23 erstrecken, ist in einer korrespondierend sternförmig ausgebildeten Montagenut 32 montiert. Die Montagenut 32 weist sternförmig von der Achse ausgehende Arme auf, die zu den in radialer Verlängerung angeordneten Kopfnuten 23 hin offen ausgebildet sind. Vorzugsweise überragen die freien Aussenkanten der Zentrierschneiden 28, 29, 30 den Grund der Kopfnuten 23. Die Zentrierschneiden 28, 29, 30 sind gegenüber den in Drehrichtung vorauseilenden Umfangsschneiden 24 in Umfangsrichtung um einen Winkel zwischen etwa 30° und etwa 90° versetzt angeordnet. Vorzugsweise ist das Zentrierteil 26 rotationssymmetrisch ausgebildet. Bei dem dargestellten Ausführungsbeispiel beträgt der Symmetriewinkel 120°. Das in den Bohrkopf 1 eingebettete Fussteil des Zentrierteils 26 ist wiederum mit teilkreisförmigen Erweiterungen 31 versehen. Beispielsweise sind die erweiterungen 31 derart vorgesehen, dass der Mittelpunkt der Teilkreise jeweils mit der Achse des Schafts zusammenfällt.

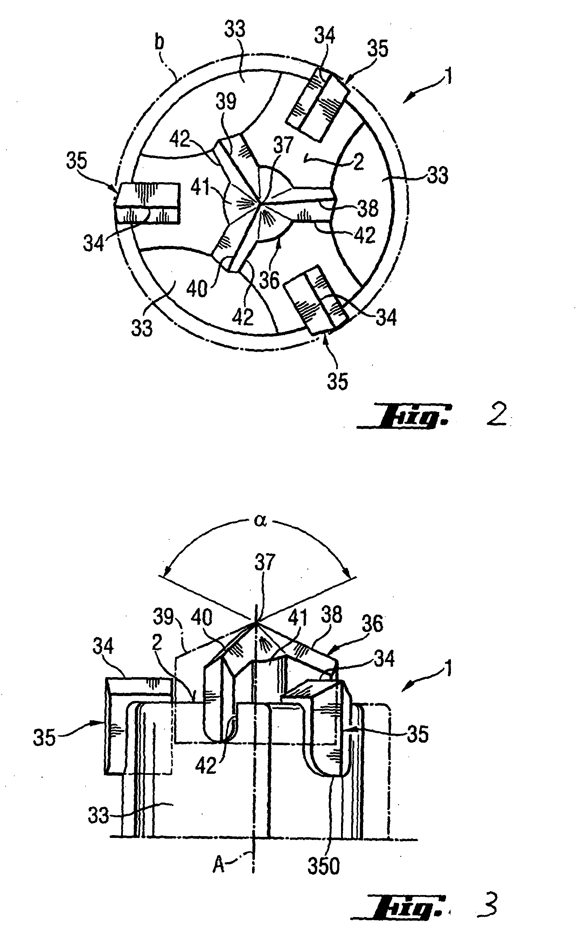

Das in Fig. 2 in Draufsicht und in Fig. 3 in Seitenansicht dargestellte Ausführungsbeispiel der Erfindung unterscheidet sich von dem Ausführungsbeispiel gemäss Fig. 1 vor allem in der Ausbildung der Umfangsschneiden 34. Die im wesentlichen radial ausgerichteten Umfangsschneiden 34 sind an plattenförmigen Schneidkörpern 35 vorgesehen, die in Nuten eingesetzt und fixiert sind, die zur Stirnseite 2 und zum-Umfang des Bohrkopfs 1 hin offen sind. Jeder Umfangsschneide 34 ist eine Kopfnut 33 zugeordnet, die etwa im gleichen Winkelabstand entlang des Umfangs des Bohrkopfs 1 vorgesehen sind. Das Zentrierteil 36 ist in einer zu den Kopfnuten 33 hin offen ausgebildeten, stemförmigen Montagenut 42 befestigt und weist wiederum drei radial verlaufende Zentrierschneiden 38, 39, 40 auf, die sich jeweils von der mit der Achse A zusammenfallenden Zentrierspitze 37 zu einer Kopfnut 33 erstrecken. Vorzugsweise überragen die freien Aussenkanten der Zentrierschneiden 38 39, 40 den Grund der Kopfnuten 33. Die Zentrierschneiden 38, 39, 40 sind gegenüber den in Drehrichtung vorauseilenden Umfangsschneiden 34 in Umfangsrichtung um einen Winkel zwischen etwa 30° und etwa 90° versetzt angeordnet. Bei dem dargestellten Ausführungsbeispiel beträgt der Versatzwinkel etwa 60°. Die Zentrierschneiden 38, 39, 40 weisen an der Zentrierspitze 37 einen Spitzenwinkel α auf, der etwa 110° und etwa 150° beträgt. Bei dem dargestellten Ausführungsbeispiel beträgt der Spitzenwinkel α etwa 130°. Das in den Bohrkopf 1 eingebettete Fussteil des Zentrierteils 36 ist wiederum mit teilkreisförmigen Erweiterungen 41 versehen. Beispielsweise sind die Erweiterungen 41 derart vorgesehen, dass der Mittelpunkt der Teilkreise jeweils mit der Achse des Schafts zusammenfällt. Der in die Montagenut eingesetzte Plattenfuss 350 ist vorzugsweise halbkreisförmig ausgebildet.

## Patentansprüche

1. Bohrwerkzeug mit einem länglichen Schaft mit wenigstens einer wendelförmigen Abfuhrnut für Bohrklein, an dessen einem Längsende ein Einsteckende für die Werkzeugaufnahme eines Bohrgeräts vorgesehen ist und dessen gegenüberliegendes Längsende an einen Bohrkopf (1) angrenzt, der mit wenigstens zwei, vorzugsweise im wesentlichen axial verlaufenden Kopfnuten (23; 33) versehen ist, die mit der wenigstens einen Abfuhrnut in Verbindung stehen, und dessen Stirnfläche (2) von Schneiden aus einem Schneidwerkstoff überragt sind, wobei die Schneiden ein Zentrierteil (26; 36) mit einer Zentrierspitze (7; 17; 27; 37), die mit der Achse (A) des Schafts zusammenfällt, und wenigstens zwei Umfangsschneiden (24; 34) umfassen, die gegenüber der Zentrierspitze (27; 37) axial zurückgesetzt sind und den Umfang des Bohrkopfs (1) im Bereich zwischen den Kopfnuten (23; 33) derart radial überragen, dass sie den Bohrdurchmesser definieren wobei das Zentrierteil (26; 36) plattenförmig ausgebildet und in einer Montagenut (32; 42) befestigt ist, die zur Stirnfläche (2) des Bohrkopfs (1) und zu wenigstens einer der Kopfnuten (23; 33) hin offen ausgebildet ist, und wenigstens eine die Zentrierspitze (27; 37) umfassende Zentrierschneide (28, 29, 30; 38, 39, 40) aufweist, die dem Verlauf der Montagenut (32; 42) im wesentlichen folgt und mit einer in Drehrichtung vorauseilenden Umfangsschneide (24; 34) einen Winkel (β) von etwa 30° bis etwa 150° einschliesst, **dadurch gekennzeichnet,**
**dass** das Zentrierteil (26, 36) sternförmig mit drei radial verlaufenden Zentrierschneiden (28, 29, 30, 38, 39, 40) ausgebildet ist und dass drei Umfangsschneiden (24, 34) vorgesehen sind, wobei die Zentrierschneiden (28, 29, 30, 38, 39, 40) gegenüber den in Drehrichtung vorauseilenden Umfangsschneiden (24, 34) in Umfangsrichtung jeweils um einen Winkel zwischen etwa 30° und etwa 90 ° versetzt angeordnet sind.

2. Bohrwerkzeug nach Anspruch 1, **dadurch gekennzeichnet, dass** sich die Zentrierschneide (28, 29, 30; 38, 39, 40) bis zur Kopfnut (3; 13; 23; 33) erstreckt und vorzugsweise den Grund der Kopfnut radial überragt.

3. Bohrwerkzeug nach Anspruch 1 oder 2, **dadurch gekennzeichnet, dass** die Umfangsschneiden (34) an plattenförmigen Schneidkörpern (35) ausgebildet sind und im wesentlichen radial verlaufen.

4. Bohrwerkzeug nach Anspruch 3, **dadurch gekennzeichnet, dass** die Plattenstärke (s) der Umfangsschneiden (34) gleich oder grösser ist als die Platten- stärke (t) des Zentrierteils (36).

5. Bohrwerkzeug nach einem der vorangehenden Ansprüche, **dadurch gekennzeichnet**, das die drei Umfangsschneiden (14; 24; 34) die stirnseitige Hüllfläche des Bohrkopfs (1) axial im gleichen Ausmass überragen und gegenüber seiner Umfangshüllfläche den gleichen radialen Überstand aufweisen.

6. Bohrwerkzeug nach Anspruch 5, **dadurch gekennzeichnet, dass** das Zentrierteil (26; 36) drei Zentrierschneiden (28, 29, 30; 38, 39, 40) aufweist, die sich von der Zentrierspitze (27; 37) bis zu den am Umfang des Bohrkopfs (1) vorgesehen Kopfnuten (23; 33) erstrecken und in im wesentlichen sternförmig ausgebildeten Nuten (22, 32) montiert sind, die jeweils zur Stirnfläche (2) des Bohrkopfs (1) und zu einer der Kopfnuten (23, 33) hin offen ausgebildet sind.

7. Bohrwerkzeug nach Anspruch 5, **dadurch gekennzeichnet, dass** das Zentrierteil (26; 36) symmetrisch aufgebaut ist.

8. Bohrwerkzeug nach Anspruch 6 oder 7, **dadurch gekennzeichnet, dass** der von den Zentrierschneiden (38, 39, 40) an der Zentrierspitze (37) eingeschlossene Spitzenwinkel (α) zwischen etwa 110° und etwa 150° liegt.

9. Bohrwerkzeug nach einem der Ansprüche 5 bis 8, **dadurch gekennzeichnet, dass** benachbarte Umfangsschneiden (24; 34) voneinander den gleichen Winkelabstand aufweisen und jeweils durch eine Kopfnut (23; 33) voneinander getrennt sind.

10. Bohrwerkzeug nach Anspruch 9, **dadurch gekennzeichnet, dass** die Kopf- nuten (23; 33) alle im wesentlichen den gleichen Querschnitt aufweisen.

11. Bohrwerkzeug nach einem der vorangehenden Ansprüche, **dadurch gekennzeichnet, dass** alle zum Umfang des Bohrkopfs (1) hin abfallenden Schneiden auf einer einzigen Kegelmantelfläche angeordnet sind.

12. Bohrwerkzeug nach einem der vorangehenden Ansprüche, **dadurch gekennzeichnet, dass** das plattenförmige Zentrierteil (26; 36) im Bereich seines in den Bohrkopf (1) eingebetteten Fussteils wenigstens eine Erweiterung (11; 21; 31; 41) aufweist, die im achsnahen Bereich des Fussteils angeordnet und vorzugsweise teilkreisartig ausgebildet ist.

13. Bohrwerkzeug nach einem der vorangehenden Ansprüche, **dadurch gekennzeichnet, dass** das plattenförmige Zentrierteil und/oder die die Umfangsschneiden tragenden Schneidkörper ein Fussteil (350) besitzen, das eine im wesentlichen halbkreisförmige Kontur aufweist.

## Claims

1. Drilling tool with an oblong shaft with at least one helical discharge groove for drillings, on one of whose longitudinal ends a plug-in end is provided for the tool recess of a drill, and whose opposing longitudinal end lies adjacent to a drilling head (1) which is provided with at least two head grooves (23; 33) preferably running in an essentially axial direction, which grooves are in communication with at least one of the discharge grooves, and from whose front face (2) project cutting edges from a cutting tool, wherein the cutting edges enclose a centring section (26; 36) with a centring point (27; 37), which coincides with the axis (A) of the shaft, and at least two peripheral cutting edges (24; 34) which are axially set back relative to the centring point (27; 37) and project radially from the circumference of the drilling head (1) in the region between the head grooves (23; 33) so that they define the drilling diameter, and wherein the centring section (26; 36) has a plate-shaped design and is secured in an assembly groove (32; 42) which is in turn designed so that it is open in the direction of the front face (2) of the drilling head (1) and at least one of the head grooves (23; 33), and exhibits at least one centring cutting edge (28, 29, 30; 38, 39, 40) enclosing the centring point (27; 37), which edge follows essentially the course of the assembly groove (32; 42) and forms an angle (β) of approximately 30° to approximately 150° with a peripheral cutting edge (24; 34) advancing in the direction of rotation, **characterised in that** the centring section (26, 36) is of star-shaped design with three radially running centring cutting edges (28, 29, 30, 38, 39, 40), and **in that** three peripheral cutting edges (24, 34) are provided, wherein the centring cutting edges (28, 29, 30, 38, 39, 40) are arranged offset in the circumferential direction, relative to the peripheral cutting edges (24, 34) advancing in the direction of rotation, by an angle of between approximately 30° and approximately 90°.

2. Drilling tool according to Claim 1, **characterised in that** the centring cutting edge (28, 29, 30; 38, 39, 40) extends as far as the head groove and preferably projects from the base of the head groove.

3. Drilling tool according to Claim 1 or 2, **characterised in that** the peripheral cutting edges (34) are formed on plate-shaped cutting elements (35) and run in an essentially radial direction.

4. Drilling tool according to Claim 3, **characterised in that** the plate strength (s) of the peripheral cutting edges (34) is equal to or greater than the plate strength (t) of the centring section (36).

5. Drilling tool according to one of the preceding claims, **characterised in that** the three peripheral cutting edges (14; 24; 34) project axially to the same extent from the front envelope face of the drilling head (1) and exhibit the same radial projection relative to its peripheral envelope surface.

6. Drilling tool according to Claim 5, **characterised in that** the centring section (26; 36) exhibits three centring cutting edges (28, 29, 30; 38, 39, 40) which extend from the centring point (27; 37) as far as the head grooves (23; 33) provided on the circumference of the drilling head (1), and **in that** grooves (22, 32), with an essentially star-shaped design, are provided which are designed so that they are open in the direction of the front face (2) of the drilling head (1) and one of the head grooves (23, 33).

7. Drilling tool according to Claim 5, **characterised in that** the centring section (26; 36) is of a symmetrical construction.

8. Drilling tool according to Claim 6 or 7, **characterised in that** the angle of point (α) formed by the centring cutting edges (38, 39, 40) on the centring point (37) is between approximately 110° and approximately 150°.

9. Drilling tool according to one of Claims 5 to 8, **characterised in that** adjacent peripheral cutting edges (24; 34) exhibit the same angular distance from each other and are each separated from each other by a head groove (23; 33).

10. Drilling tool according to Claim 9, **characterised in that** the head grooves (23; 33) all exhibit essentially the same cross-section.

11. Drilling tool according to one of the preceding claims, **characterised in that** all the cutting edges descending in the direction of the circumference of the drilling head (1) are arranged on a single conical surface area.

12. Drilling tool according to one of the preceding claims, **characterised in that** the plate-shaped centring section (26; 36) exhibits in the region of its base section embedded in the drilling head (1) at least one extension (31; 41) which is arranged in the region of the base section close to the axis and is designed preferably in the manner of a pitch circle.

13. Drilling tool according to one of the preceding claims, **characterised in that** the plate-shaped centring section and/or the cutting elements supporting the peripheral cutting edges are provided with a base section (350) which exhibits an essentially semicircular cross-section.

## Revendications

1. Foret avec une tige allongée avec au moins une gorge d'évacuation hélicoïdale pour les débris de forage, à l'une des extrémités longitudinales de laquelle est prévue une extrémité insérable pour le mandrin d'outil d'un outil de forage et dont l'extrémité longitudinale opposée est adjacente à une tête de forage (1) qui est pourvue d'au moins deux gorges de tête (23; 33), lesquelles s'étendent de préférence sensiblement axialement et communiquent avec au moins une gorge d'évacuation, et dont la face frontale (2) est dépassée par des taillants en un matériau de coupe, les taillants comprenant une partie de centrage (26 ; 36), avec une pointe de centrage (27 ; 37) qui coïncide avec l'axe (A) de la tige, et au moins deux taillants périphériques (24 ; 34) qui se trouvent en retrait axial par rapport à la pointe de centrage (27 ; 37) et dépassent radialement de la circonférence de la tête de forage (1) dans la zone située entre les gorges de tête (23 ; 33), de sorte qu'ils définissent le diamètre de forage, la partie de centrage (26 ; 36) étant conformée en plaque et fixée dans une gorge de montage (32 ; 42) qui est conformée de manière ouverte en direction de la face frontale (2) de la tête de forage (1) et d'au moins une des gorges de tête (23 ; 33), et comportant au moins un taillant de centrage (29, 30 ; 38, 39, 40), lequel englobe la pointe de centrage (27, 37), suit sensiblement le tracé de la gorge de montage (32, 42) et forme, avec un taillant périphérique (24; 34) qui le précède dans la direction de rotation, un angle (β) d'environ 30° à environ 150°, **caractérisé en ce que** la partie de centrage (26, 36) est conformée en étoile avec trois taillants de centrage s'étendant radialement (28, 29, 30, 38, 39, 40), et **en ce que** trois taillants périphériques (24, 34) sont prévus, les taillants de centrage (28, 29, 30, 38, 39, 40) étant disposés chacun avec, dans la direction circonférentielle, un décalage angulaire compris entre environ 30° et environ 90° par rapport aux taillants périphériques (24, 34) qui les précèdent dans la direction de rotation.

2. Foret selon la revendication 1, **caractérisé en ce que** le taillant de centrage (28, 29, 30; 38, 39, 40) s'étend jusqu'à la gorge de tête (23 ; 33) et, de préférence, dépasse radialement du fond de la gorge de tête.

3. Foret selon la revendication 1 ou 2, **caractérisé en ce que** les taillants périphériques (34) sont réalisés sur des corps de coupe en forme de plaques (35) et s'étendent sensiblement radialement.

4. Foret selon la revendication 3, **caractérisé en ce que** l'épaisseur de plaque (s) des taillants périphériques (34) est égale ou supérieure à l'épaisseur de plaque (t) de la partie de centrage (36).

5. Foret selon une des revendications précédentes, **caractérisé en ce que** les trois taillants périphériques (14 ; 24 ; 34) dépassent axialement de la même cote par rapport à la surface enveloppante frontale de la tête de forage (1) et présentent le même débordement radial par rapport à sa surface enveloppante périphérique.

6. Foret selon la revendication 5, **caractérisé en ce que** la partie de centrage (26 ; 36) comporte trois taillants de centrage (28, 29, 30 ; 38, 39, 40) qui s'étendent de la pointe de centrage (27 ; 37) jusqu'aux gorges de tête (23; 33) prévues à la périphérie de la tête de forage (1) et sont montés dans des gorges conformées sensiblement en étoile (22, 32), lesquelles sont de conformation ouverte respectivement vers la face frontale (2) de la tête de forage (1) et vers une des gorges de tête (23, 33).

7. Foret selon la revendication 5, **caractérisé en ce que** la partie de centrage (26; 36) est structurée symétriquement.

8. Foret selon la revendication 6 ou 7, **caractérisé en ce que** l'angle de pointe (α) formé par les taillants de centrage (38, 39, 40) au niveau de la pointe de centrage (37) est compris entre environ 110° et environ 150°.

9. Foret selon une des revendications 5 à 8, **caractérisé en ce que** des taillants périphériques voisins (24 ; 34) présentent l'un par rapport à l'autre le même écart angulaire et sont séparés l'un de l'autre par une gorge de tête (23 ; 33).

10. Foret selon la revendication 9, **caractérisé en ce que** les gorges de tête (23; 33) présentent toutes sensiblement la même section transversale.

11. Foret selon une des revendications précédentes, **caractérisé en ce que** tous les taillants inclinés vers la périphérie de la tête de forage (1) sont disposés sur une surface périphérique conique unique.

12. Foret selon une des revendications précédentes, **caractérisé en ce que** la partie de centrage en forme de plaque (26 ; 36) comporte, dans la zone de sa partie de pied encastrée dans la tête de forage (1), au moins une partie élargie (31, 41) qui est disposée dans la zone de la partie de pied proche de l'axe et est conformée de préférence en cercle partiel.

13. Foret selon une des revendications précédentes, **caractérisé en ce que** la partie de centrage en forme de plaque et/ou les corps de coupe portant les taillants périphériques possèdent une partie de pied (350) qui présente un contour sensiblement semi-circulaire.
